Europäisches Patentamt

European Patent Office

Office européen des brevets

(11) Publication number: **0 050 109**
**B1**

# EUROPEAN PATENT SPECIFICATION

(45) Date of publication of patent specification: **31.10.84**

(51) Int. Cl.³: **G 06 F 3/04**

(21) Application number: **80900892.3**

(22) Date of filing: **28.02.80**

(86) International application number:
**PCT/US80/00206**

(87) International publication number:
**WO 81/02479 03.09.81 Gazette 81/21**

(54) **MICROPROCESSOR INTERFACE CONTROL APPARATUS.**

(43) Date of publication of application:
**28.04.82 Bulletin 82/17**

(45) Publication of the grant of the patent:
**31.10.84 Bulletin 84/44**

(84) Designated Contracting States:
**AT CH DE FR GB LU NL SE**

(56) References cited:
FR-A-2 375 660
US-A-3 739 352
US-A-3 786 436
US-A-3 931 615
US-A-4 112 490
US-A-4 144 562
US-A-4 145 751
US-A-4 156 931
US-A-4 172 283
US-A-4 183 084
US-A-4 209 838
US-A-4 209 841

(73) Proprietor: **INTEL CORPORATION**
**3065 Bowers Avenue**
**Santa Clara, CA 95051 (US)**

(72) Inventor: **JACKSON, Daniel K.**
**4870 S.W. 141st Street**
**Beaverton, OR 97005 (US)**

(74) Representative: **Zenz, Joachim Klaus et al**
**Am Ruhrstein 1**
**D-4300 Essen 1 (DE)**

(56) References cited:
ELECTRICAL DESIGN NEWS-EDN-, vol. 22, no. 19, October 20, 1977, Denver (US), M.M. ZYLA: "To minimize/uP support chips take a systems approach", pages 69/73
IBM TECHNICAL DISCLOSURE BULLETIN, vol. 20, no. 10, March 1978, New York (US), r.R. McLAUGHLIN et al.: "Zero Bit Insert/Delete Feature", pages 3829-3832

## Description

Field of the Invention

The present invention relates to microprocessors, and more particularly to apparatus for controlling the movement of data off of and onto a microprocessor chip.

Description of the Prior Art

Computer systems have in the past been concerned with the movement of digital data between modules in the system. Traditionally, the central processing unit has been packaged separately from memory units and peripheral input/output devices such as disc files, printers, and magnetic tape storage units. Prior to the development of large-scale integration (LSI) technology, the interface between units was mainly concerned with transferring data at the highest speed possible commensurate with the electrical characteristics of the cables between the units and the electronic circuits which drive signals on the cables. An example of such an interface in wide use today is that used on the IBM System/360 computers between input/output devices and the input/output channel of the main processor. This interface is described in U.S. Patent 3,336,582 — Interlocked Communication System — Beausoleil et al, filed September 1, 1964, and issued August 15, 1967. This I/O interface provides for a data format and control signal sequence definition which is common to all control units which can be attached to the system. The rise and fall of all signals transmitted over the interface are controlled by corresponding interlocked responses. In such a system there is no practical limit on the number of lines which can be utilized between the units, and, therefore, a separate bus is provided for address information and data information. The width of the data bus is conveniently made equal to the width of data words utilized within the data processing unit. Furthermore, the address bus is made equal to the width of the data word used for address development. The IBM System/360 Interface therefore uses nine lines to represent bus out which is used to transmit data, I/O device addresses, commands, and control orders to the peripheral devices. Furthermore, a separate set of nine lines, bus in, is used to transmit data, selected I/O device identification, status information, and sense data from the peripheral devices. In addition, more than 16 simplex input and output lines are utilized for controlling information on the buses, for special sequences, for the scanning of or selection of attached input/output devices, and for usage meters. A total of over 34 lines are used to control data movement.

The use of such an interface with microprocessors is prohibitive because there are not enough input/output pins available on the LSI package with present-day technology. To solve this problem, microprocessors have to use fewer actual lines interconnecting the modules, but still have the requirement of being able to handle data movement and control operations just as complex as those of previous data processing systems. This has been accomplished in the past by multiplexing control, address, and data information on a single bidirectional bus which carries information first in one direction, and then in another direction, thus avoiding duplication of the signal lines (Electrical Design News, vol. 22, no. 19, pp. 69—73, M. M. Zyla: "To minimise µP support chips, take a systems approach"). The number of bus lines required is further reduced in prior microprocessors by multiplexing the address of the peripheral device on the data bus and synchronizing the output of both address and data on the output buses (US—A—4 112 490). Furthermore, data transfer control signals have been encoded to simplify read and write input/output and memory operations, thus resulting in reduced pin requirements. In addition to a line carrying system clock signals, a typical microprocessor interface would include the following lines:

Two status signal lines are utilized to encode the status of the data transfer, read, write, halt, or fetch. One control line is utilized to indicate whether the device being addressed is a memory device or an I/O device. One line is utilized by an external device to signal a request that the device needs the address and data bus. Another line from the microprocessor indicates to the external device that the above-mentioned request has been acknowledged. A separate line is utilized by the peripheral to generate an interrupt request. A single line is utilized by the microprocessor to latch address information into the peripheral device. An 8-bit address bus and a separate 8-bit data bus complete the minimum lines necessary for this type of interface. If a 16-bit address is utilized, the data bus carries a portion of the address word during an address cycle. In a subsequent cycle this bus is used to carry data.

As seen from the above, it takes 23 lines to provide the functions described.

As more and more complex functions are incorporated on a microprocessor chip, the number of pins dedicated to input/output functions becomes more critical. This is particularly true where large microprocessors are partitioned between two or more chips. This means that more and more pins have to be dedicated to interchip control signals, thus making fewer pins available for input/output operations. It is therefore desirable to further reduce the number of bidirectional information bus lines and other pins utilized while maintaining a simplified data transfer protocol between the microprocessor and peripheral units.

Brief Summary of the Invention

The present invention provides a bus interface unit and a method of transferring information as defined in the claims. A single bidirectional address/control/data bus in combination with two simplex control lines is used to perform all complex address control and data transfer functions. This is accomplished by assigning different functions to these lines during sequential cycles of a data transfer operation. In the described embodiment, during a first cycle the bus carries a control data specification and the low order bits of the peripheral address. The control specification is encoded to provide information indicating the type of access (memory device or I/O device), the direction of data transfer (read or write), the length of data to be transferred (1 byte, 2 bytes, etc.), and modifier bits which further define the type of access being undertaken. Interprocessor communication (IPC) is signaled during this first cycle by lowering the simplex control line from the peripheral device to the microprocessor.

During the second cycle the remainder of the address information is placed on the bus and the simplex line from the microprocessor to the peripheral is asserted to indicate that valid data is on the bus. Subsequent cycles are utilized to transfer data (up to 16 bits at a time) until the total number of bytes has been transferred. During these multiple cycles the simplex line from the peripheral device to the microprocessor is asserted high to indicate that valid data is on the bus during a read cycle or that data has been accepted during a write cycle. Error information is signaled at the end of a read or write cycle by holding this particular simplex line low.

The invention has the advantage that in one transaction a variable-length data transfer takes place with the transmission of only one set of address and control specification information. Prior microprocessors are constrained to issue data transfer requests which are closely related to the physical width of the memory (8 or 16 bits). The present invention encodes a complex data transfer request into a compact two-cycle control specification, which may direct an external unit (such as a memory) to transfer up to 20 bytes of information.

A further advantage of the invention is that address information does not have to be maintained on a separate bus for the several cycles during which data is transferred because the length information indicates to the peripheral device the number of bytes to be stored in the address specified during the first and second cycle. Thus the address information can be latched in the peripheral and the address bus used to transfer data.

A further advantage of the invention is that simplex lines for encoding status information and information indicating whether the peripheral device is a memory or an I/O device can be eliminated because this information is placed directly on the data bus during the first cycle of an operation.

The invention has the further advantage that only two simplex lines are needed to synchronize data and to perform error functions and interprocessor communication functions because these lines are assigned different meanings at different times during the cycles of a complete operation.

It can thus be seen that the present invention performs an complex information transfer operation over an interface by using a bare minimum of signal lines.

Brief Description of the Drawings

The foregoing and other objects, features and advantages of the invention will be apparent from the following detailed description of a preferred embodiment of the invention as illustrated in the accompanying drawings wherein:

FIGURE 1 is a functional block diagram illustrating the various components of a microprocessor in which the invention is embodied;

FIGURE 2 is a timing diagram which shows the functions of the various interface lines during various cycles of a data transfer operation;

FIGURE 3 is a table setting forth the control specification for the address, control, and data bytes;

FIGURE 4 is a more detailed block diagram of those components of the instruction unit shown in FIGURE 1 which are necessary for an understanding of the present invention;

FIGURE 5 is a block diagram of those components of the execution unit shown in FIGURE 1 which are necessary for an understanding of the present invention;

FIGURE 6 is a block diagram of those components of the bus interface unit shown in FIGURE 1 which are necessary for a complete understanding of the present invention;

FIGURE 7 is a timing diagram which shows the nominal read timing;

FIGURE 8 is a timing diagram which shows the minimum read timing;

FIGURE 9 is a timing diagram which shows a nominal write timing; and,

FIGURE 10 is a timing diagram which shows a minimum write timing.

Description of the Invention

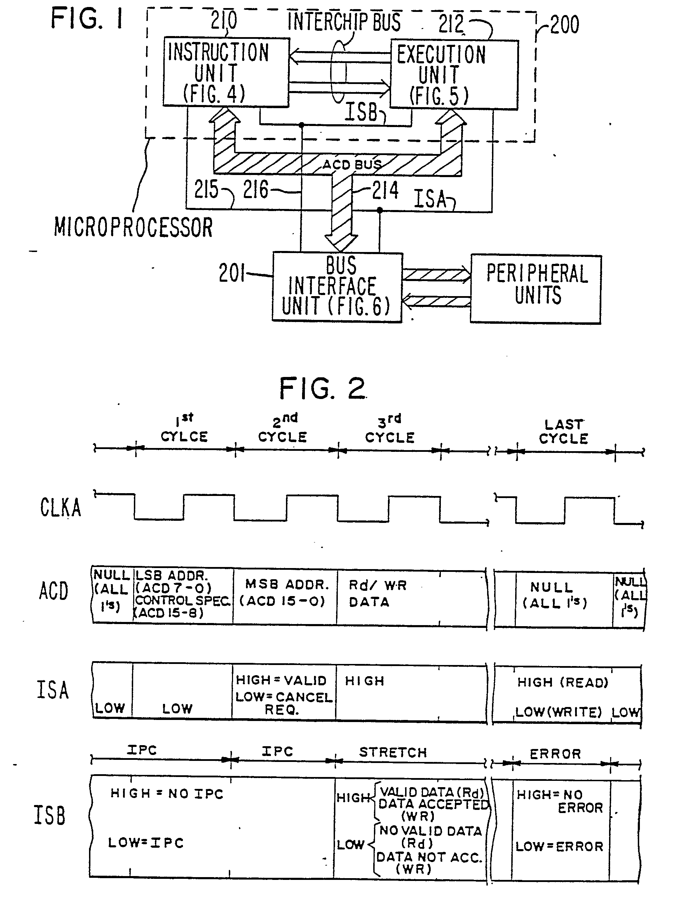

FIGURE 1 is a block diagram of a microprocessor in which the present invention is embodied. A microprocessor 200 is attached to a bus interface unit 201 which provides for interface control of data transfers between the processor 200 and other units such as memories, I/O devices, or other processors in the system.

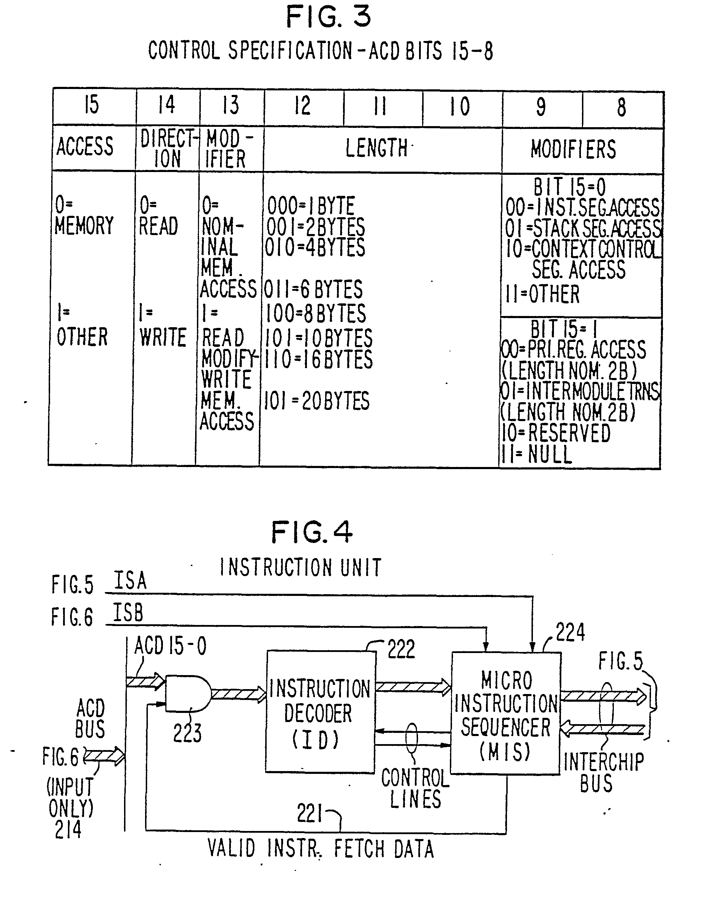

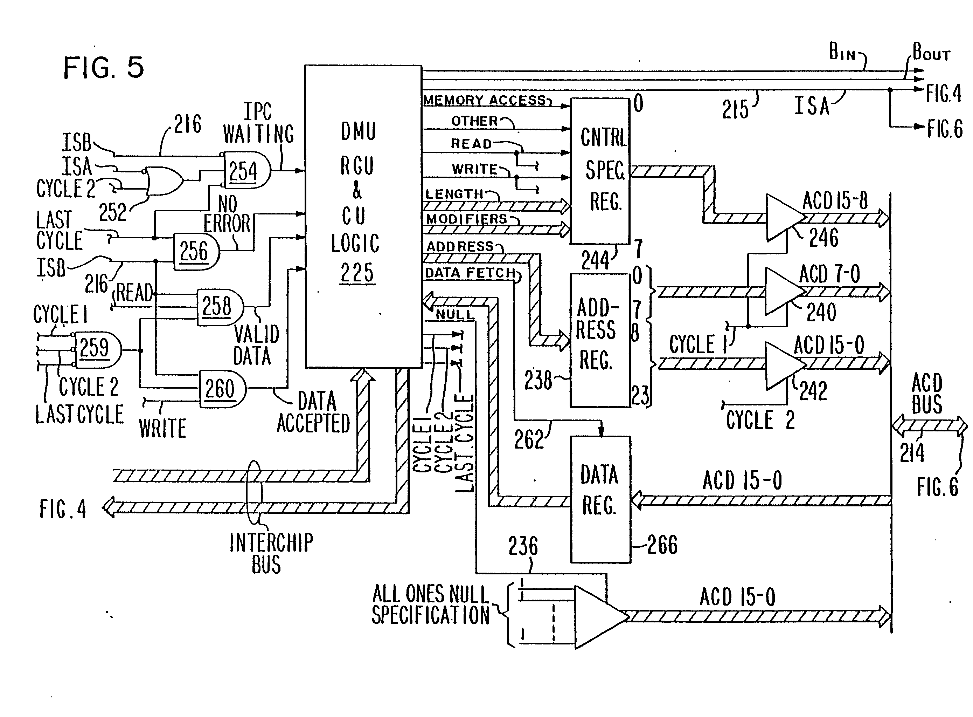

The microprocessor is comprised of two separate chips, one for the instruction unit 210, and the other for the execution unit 212. Communication between the instruction unit and the execution unit is over an interchip bus. The instruction unit is shown in more detail in FIGURE 4 and the execution unit is shown in more detail in FIGURE 5. The logic shown in these figures is only that which is necessary for an understanding of the present invention.

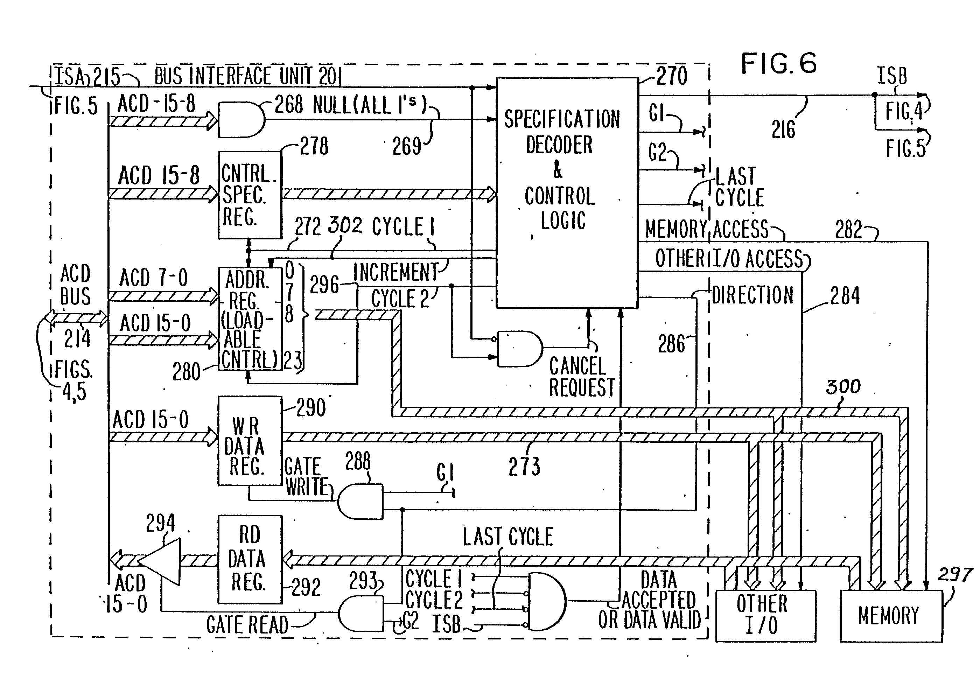

Off-chip communication with external processors, memories, or peripheral devices is accomplished by means of an interface which communicates with a bus interface unit 201 more fully described in FIGURE 6. The interface lines as a minimum are comprised of a clock line (CLKA not shown in FIGURE 1), an address/control/data bus 214 which includes a plurality of bidirectional lines, a simplex line (ISA) 215 from the execution unit 212 to the instruction unit 210 and the bus interface unit 201, and a simplex line (ISB) 216 from the bus interface unit 201 to the instruction unit 210 and the execution unit 212. It should be understood that the processor 200 could be implemented on a single chip, and that the present invention is not limited to the specific two-chip configuration shown in FIGURE 1.

Interface Lines and their Functions
ACD 15—0
These 16 lines comprise a bidirectional address/control/data bus. The lines are output from the execution unit to indicate the action desired to the bus interface. In the other direction, the bus is input to the instruction unit and the execution unit from the bus interface to carry information read in.

ISA
The ISA line 215 is output from the execution unit to the instruction unit and the bus interface unit. Referring to FIGURE 2, ISA is low whenever no transaction is taking place between the processor and external units. ISA is high whenever a transaction is underway, such as during the second cycle when address data is on the ACD bus and the third and subsequent cycles when read or write data is being transferred. ISA is low for the first cycle of a transaction when lines 15—8 of the ACD bus carry a control specification and when ACD 7—0 carry the low 8 bytes of the address for memory references. ISA is high during the second cycle when the high order 16 address bits of a memory reference are on the ACD bus. During this cycle a request is canceled by asserting ISA low. ISA is low during the last cycle of a write operation (which may serve also as the first cycle of the subsequent transaction).

ISB
ISB is a simplex line from the bus interface unit to both the instruction unit and the execution unit. ISB can have three different types of significance depending upon the cycle during which it is asserted. ISB has either interprocessor communication (IPC) significance, stretch significance, or error significance.
Whenever ISA is low, ISB has IPC significance, for example, during the first and second cycles shown in FIGURE 2. Whenever ISA is low, ISB has IPC significance except in the first cycle following a write type of transaction (as specified by bit 14 of the control specification shown in FIGURE 3), in which event ISB has error significance.
ISB also has IPC significance in the first cycle of a transaction during which ISA is high, for example, during the second cycle shown in FIGURE 2. Thereafter ISB has stretch significance for the remainder of the time ISA is high except in the last cycle of a read transaction when it has error significance.
Stretch significance means that read or write data is stretched over several cycles depending upon the length of data to be transferred as specified by bits 10, 11, and 12 in the control specification, FIGURE 3.
Referring now to FIGURE 2, the basic operation of the interface will now be described. For simplicity of illustration, only one bus interface unit is shown connected to the interface. It is understood that more than one bus interface unit can be utilized in the practice of the present invention. Timing synchonization between the units shown in FIGURE 1 is provided by a clock signal (CLKA) which is connected to each of the units. A read or write operation takes place over several clock cycles. Prior to the start of a read or write operation the ACD bus is energized by the execution unit to generate all ones (called a "null" specification). ISA is asserted low by the execution unit during this period. ISB is normally asserted high by the bus interface unit to indicate that there is no interprocessor communication message waiting to be transferred to the processor 200. The execution unit commences a data transfer operation in response to an access memory type of microinstruction received from the instruction unit 210. The execution unit 212 generates the physical address of the reference and issues the least significant byte of the address along with control information specifying the type of reference and the number of bytes to be transferred. The control specification is shown in detail in the table of FIGURE 3. The bus interface unit monitors the ACD bus. When it changes from a "null" specification, then the bus interface clocks the least significant byte of address and the control specification into registers in the bus interface unit 201. During the second cycle the execution unit places the most significant byte of address information on the ACD bus and asserts ISA high to indicate to the bus interface unit that the address information is now on the bus. The execution unit is able to cancel the request by asserting ISA low (instead of high) during this second cycle, which will be interpreted by the bus interface as a canceled request signal, even though information may still be on the ACD bus.
The processor 200 may issue requests for one, two, four, six, eight, ten, sixteen, or twenty bytes of data to be transferred. This length information is part of a control field which was transmitted during the first cycle of the transaction. As the data bytes are returned from memory (for a read request), they are buffered and aligned by the bus interface unit and transferred to the processor 200 in the correct order. During the third cycle of a write transaction, the execution unit places write information on the ACD bus, holds ISA asserted high and waits for ISB to be asserted high, thus indicating that the bus interface unit has accepted the write data. If data transfer is to be in the opposite direction, the execution unit waits during the third cycle until ISB is asserted high. This indicates that the bus interface unit has placed read data on the ACD bus and that the data is valid. Cycles similar to that described for the third cycle are repeated until all the bytes of data indicated by the length control specification generated during the first cycle are received. During the last cycle a "null" (all ones) is generated on the ACD bus and ISA is brought low by the execution unit to end the write operation. An error is signaled by ISB being asserted low by the bus interface unit. During a read operation ISA is brought low in the cycle following the last cycle and ISB again has error significance in the last cycle. In this manner, ISA is used to signal the end of a write operation by going from high to low during the last cycle of a write operation. ISA is held asserted high during a read operation for the last cycle during which time ISB has error significance. During a write operation the execution unit places all ones on the ACD bus during the last cycle and asserts ISA low. ISB is then used to signal an error condition, high for no error and low for error.

The logic for performing the interface functions just described is shown in more detail in FIGURES 4, 5, and 6. Only those portions concerned with controlling interface sequences will be discussed so that the present invention can be more easily understood.

Referring to FIGURE 4, the instruction unit is a macroinstruction decoder which decodes an instruction stream and transfers the microinstructions necessary to execute the stream to the execution unit of FIGURE 5 over the interchip bus. In addition, the instruction unit also transfers logical address information to holding registers in the execution unit. The execution unit, described subsequently, decodes and executes the microinstructions received from the instruction unit.

The instruction unit is comprised of two main blocks, the instruction decoder 222 and the microinstruction sequencer 224. The instruction decoder (ID) receives instructions from the ACD bus 214 and latches them into the instruction decoder by means of the valid instruction fetch data line 221 which is generated by the microinstruction sequencer in response to the state of the ISA and ISB interface lines. The ID interprets the fields of the instruction and generates the microinstructions (or starting addresses for the longer microinstruction routines) which are necessary to execute the macroinstruction. In addition, the ID formats logical address information for subsequent transfer to holding registers on the execution unit.

The microinstruction sequencer (MIS) 224 contains the control circuitry for sequencing through the various microinstruction flows necessary to execute the macroinstructions. The MIS receives starting addresses for microinstruction routines from the ID, decodes the microinstructions from a microprogrammed ROM to control the microprogrammed sequencing, and transfers the microinstructions over the interchip bus to the execution unit where they are executed. By monitoring ISA and ISB, the microinstruction sequencer is able to determine when valid data is on the ACD bus 214. For example, when ISA is high after the second cycle of a data transfer, ISB is asserted high to indicate that valid read information is on the bus. In response to this indication the microinstruction sequencer MIS generates a signal on the line 221 to thereby energize AND circuit 223 thus gating information on the ACD bus into the instruction decoder 222.

Referring now to FIGURE 5, the microinstruction stream is received by the execution unit over the interchip bus. The interchip bus is connected to logic block 225 which includes the data manipulation unit (DMU), reference generation unit (RGU), and control unit (CU) logic.

Briefly, the DMU performs arithmetic, logical, and execution operations on data brought in during the course of program execution. The RGU builds 24-bit physical addresses from logical addresses in the macroinstruction and issues addresses. The control unit receives microinstructions from the instruction unit, retains them, and exercises the DMU and the RGU. Many other functions are performed by the logic 225; however, for purposes of this specification, only those functions which pertain to the operation of the present invention are shown in FIGURE 5.

The execution unit drives a "null" specification on the ACD bus whenever there is no transaction in progress by energizing line 236 which forces all ones onto the ACD bus lines. Also, ISA is forced low. Once the execution unit receives an access memory type of microinstruction from the instruction unit, it generates the physical address of the reference and stores it in address register 238. The least significant byte of the address is outputted to GATE circuit 240. The most significant bytes in the remainder of the address are outputted to GATE circuit 242. The logic 225 also composes control information specifying the type of reference and the number of bytes to be transferred, whether the operation is a read or write operation along with certain modifier bytes shown and described previously with respect to FIGURE 3. This control specification is stored in a control specification register 244. The control specification register is outputted to GATE circuit 246. During cycle one, generated by the logic 225, GATE circuits 240, 246 are energized to thus gate the low order byte of the address from address register 238 along with the control specification to the ACD bus 214. At the same time the logic 225 asserts the ISA line 215 low.

During the next cycle, the logic 225 energizes the cycle two line and disenergizes the cycle one line. This causes GATE circuit 242 to be energized, thus forcing the most significant bytes of the remainder of the address, stored in register 238, onto the ACD bus. At the same time the logic 225 asserts the ISA line 215 high. A request is canceled (e.g., due to a bounds violation) by asserting ISA low at this time.

The execution unit monitors the ISB line, 216, from the bus interface unit. A low on the ISB line when a bus transaction is not in progress (ISA is low) indicates to the processor that there is an interprocessor communication (IPC) waiting for it. The logic for performing this function is comprised of OR circuit 252, and AND circuit 254. ISB has IPC significance whenever ISA is low, and during the first cycle (cycle two) that ISA is high except when ISB has error significance, which is during the last cycle of a transaction. In that situation when ISB is asserted high, this indicates a no error condition out of AND circuit 256.

ISB is also used by the bus interface to indicate bus errors to the processor. ISB has error significance during the last cycle of a transaction. A low on ISB when it has error significance, AND circuit 256, indicates to the processor that a bus error was detected during the transaction.

During a bus transaction (ISA high), ISB has "stretch" significance whenever it does not have IPC or error significance. This is represented by the logic of AND circuit 259, which energizes AND circuits 258 and 260 whenever it is not cycle one, not cycle two, or not the last cycle of an operation. Under these conditions ISB is given stretch significance. Thus, during a read operation, an output from AND circuit 258 indicates to the logic 225 that valid data has been placed by the bus interface onto the ACD bus. Similarly, during a write operation, an output from AND circuit 260 indicates (ISB high) that data has been accepted by the bus interface unit.

If the bus interface has not accepted the write data, the processor keeps the data on the ACD bus until it is accepted.

As stated previously, if a read transaction is an instruction fetch, the data is latched into the instruction unit. If the read transaction is a data fetch, the data is latched into the execution unit by energizing data fetch line 262 which gates the information on the ACD bus into data register 266. Write transactions are initiated only by the execution unit.

The bus interface unit shown in FIGURE 6 terminates and monitors the ACD bus 214 and the ISA line 215. AND circuit 268 detects a "null" pattern and provides an output signal, 269, to the specification decoder and control logic 270. When the interface changes from the null specification (of all ones or some other predetermined bit pattern), an output, 269, is generated and the specification decoder and control logic energizes cycle one line, 272, in response thereto. This line gates the ACD bus into the control specification register 278 and the least significant byte portion of the address register, loadable counter, 280. The control register is decoded. Depending upon the coding of the bits in accordance with FIGURE 3, either the memory access line 282 is energized or the other access line, 284, is energized. Further, the direction line 286 is energized for a write operation or deenergized for a read operation. If a write operation is indicated, AND circuit 288 is energized to gate subsequent data into the write data register, 290 via gate signal G1. If a read operation is indicated, data is gated from the read data register 292 through driver circuit 294 onto the ACD bus under the control of AND circuit 293 and gate signal G2.

During cycle 2 line 296 is energized, thus gating the most signficant bits of the address into the most significant bits portion of the address register, loadable counter, 280. The memory address in counter 280 is accepted by the memory module 297 if a memory access is indicated. Otherwise, the address is accepted by another module. Similarly, the write data register output 273 is accepted by memory if specified, or by another module if a memory access is not specified.

Address register is a loadable counter which is capable of being incremented in response to energization of an increment input. The logic 270 includes decoder logic for decoding the length portion (FIGURE 3) of the control specification stored in register 278 to specify the amount of data to be transferred. The logic 270 energizes the increment input 302 to the loadable counter 280 to thereby provide sequential memory addresses to the memory address bus 300 in accordance with the amount of data to be transferred as specified in the control specification.

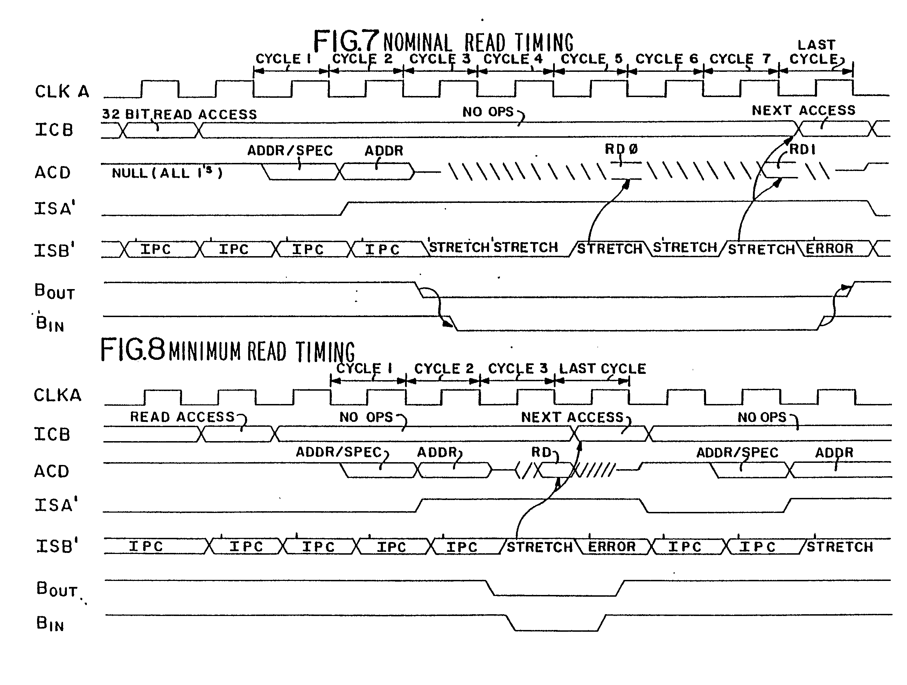

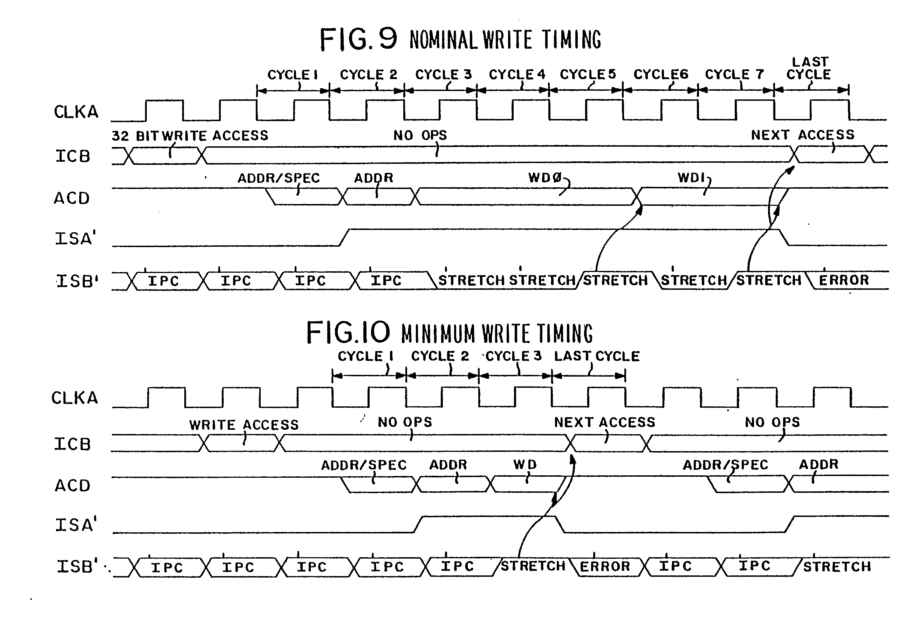

Two additional outputs are provided, buffer in (BIN) and buffer out (BOUT), FIGURE 5, to control bus transceivers to buffer and isolate the processor from other processors. The use of buffers may be desired in systems with heavy pin loading. BIN is asserted low when information is to enter the instruction unit or the execution unit on the ACD bus. BOUT is asserted high when information is to leave the execution unit on the ACD lines. The timing of BOUT and BIN is shown in FIGURES 7 and 8.

In FIGURE 7 a 32-byte read access is shown. Since the ACD bus is two bytes in width (i.e., 16 bits), two read data cycles are necessary to transfer the information. Initially the ACD bus is asserted "null" (all ones). The execution unit receives a 32-byte read access on the ICB (interchip bus). In response to this, it generates part of the address and a control specification during cycle one of the transaction.

During cycle two the execution unit raises ISA and places the remainder of the address on ACD. The execution unit lower BOUT and BIN, thus energizing the input buffers. As soon as the interface unit has fetched the data from the memory address specified, it places the data on the ACD bus and asserts ISB positive during cycle five. It then lowers ISB and fetches the next data byte, taking into consideration the length information specified by the control bytes. The interface unit places the second two bytes of data on ACD and again raises ISB.

During the last cycle ISB has error significance and is asserted low if an error has been detected by the bus interface unit.

BIN and BOUT are asserted high at the end of the read transaction by the execution unit.

FIGURE 8 is a timing diagram illustrating a minimum read timing. Here the read access would be for one or two bytes of data.

FIGURE 9 is a timing diagram illustrating nominal write timing for a 32-bit write access. During cycle one part of the address and the entire control specification is placed on ACD. During cycle two ISA is asserted high and the remainder of the address is placed on ACD. During cycle three write data is placed on the ACD bus by the execution unit and the execution unit maintains the write data on the bus until the bus interface unit asserts ISB high. ISB asserted high indicates that the bus interface unit has accepted the write data. The execution unit can now place the second two bytes of write data on the ACD bus. The bus interface unit responds by asserting ISB high which is an indication to the execution unit that it can remove the write data from the ACD bus and go on to the next access. During the last cycle ISB has error significance.

FIGURE 10 illustrates the minimum write timing. During the last cycle (which may be the first cycle of the next transaction) the ISB line has error significance.

It will be understood from the foregoing description of the various embodiments that additional modifications and changes in form and details may be made without departing from the scope of the invention as claimed.

## Claims

1. For use with a microprocessor interface of the type having

a bidirectional multiline bus (214) for carrying address and data bits, said bus having a total number of lines which is less than the total number of bits comprising said address;

an output line (ISA—215);

an input line (ISB—216);

means (240, 246) connected to said bus (214), operative during a first cycle (cycle 1) for placing a first number of bits (address bits 0—7) of said address on a first number (ACD 7—0) of said bus lines, and a control specification (control bits 0—7) specifying the direction of data transfer and the amount of data to be transferred, said control specification being placed on a second number (ACD 15—8) of said bus lines; and,

means (242) connected to said bus (214) operative during a second cycle (cycle 2) following said first cycle for placing a second number of bits (address bits 8—23) of said address on said first number (ACD 7—0) and said second number (ACD 15—8) of said bus lines, said data transfer to take place, to or from a location specified by said address, during cycles subsequent to said first and second cycles;

a bus interface unit comprising:

logic means (270, 278, 280) connectable to said output line (ISA—215) and to said first number (ACD 7—0) and said second number (ACD 15—8) of said bus lines,

said logic means including address registering means (280),

said logic means being operative in response to said output line (ISA—215) and to said first number of bits of said address on said first number of bus lines (ACD 7—0), during said first cycle (cycle 1), to register in address registering means (280) said first number of bits of said address (address bits 0—7),

said logic means being operative in response to said output line (ISA—215) and to said control specification on said second number of bus lines (ACD 15—8), during said first cycle (cycle 1), to decode said control specification to provide decoded control information,

said logic means (270) operative in response to said output line (ISA—215) during said second cycle (cycle 2) for registering said second number of bits of said address (address bits 8—23) in address registering means (280);

first means (286, 288, 293) connected to said logic means (270) for controlling the direction of said data transfer; and,

second means (296, 280) connected to said logic means (270) for controlling the amount of data transferred,

said first (286, 288, 293) and second (296, 280) means being operative in accordance with said decoded control information.

2. The bus interface unit in accordance with Claim 1 further comprising:

means included in said logic means and connectable to said input line (ISB—216), operative during a decoded read and a decoded write operation specified by said control information, for asserting said input line (ISB—216) in each cycle subsequent to said second cycle to thereby indicate to said microprocessor interface that valid data has been placed on said bus during a read operation and to indicate that data has been accepted during a write operation.

3. The bus interface unit in accordance with Claim 1 wherein said bus interface unit is connected to a memory module (297) in which data may be accessed at said address, said bus interface unit further comprising:

a memory address bus (300) for connecting said bus interface unit to said memory module (297); and

means connecting said address registering means (280) to said memory address bus for providing, to said memory module, said memory address comprised of said first number of bits and said second number of bits of said address.

4. The bus interface unit in accordance with Claim 3 wherein said address registering means (280) comprises a loadable counter, said loadable counter being capable of being incremented in response to energization of an increment input (302) thereto,

said logic means (270) further including means for decoding said control specification specifying the amount of data to be transferred and means for energizing said increment input (302) to said loadable counter.

5. The bus interface unit in accordance with Claim 1 further comprising:

third means connectable to said output line (ISA—215), responsive to said output line during a cycle subsequent to said first cycle for indicating to said interface logic that a bus transaction is underway; and

said logic means (270) including fourth means for energizing said input line (ISB—216), said input line (ISB—216) being energizable to indicate, during a read operation, that valid data has been placed on said bus by said interface logic and, during a write operation, that valid data has been accepted from said bus by said interface logic.

6. The bus interface unit in accordance with Claim 5 further comprising:

means (278) connectable to said bidirectional bus for registering said control specification comprised of a predetermined pattern of bits received on said bidirectional bus lines;

said logic means (270) further including decoding means for decoding said predetermined pattern of bits; and,

means (272) energizable by said decoding means, operative upon detection of said predetermined pattern of bits for starting said first cycle of information transfer on said bus (214).

7. The bus interface unit in accordance with Claim 1 or Claim 5 further comprising:

a memory module (297);

a memory address bus (300) connected to said memory module (297) and said address register (280); and,

read and write logic means (286, 288, 293) connected between said bidirectional bus (214) and said memory module (297) for controlling the direction of data transfer between said bidirectional bus and said memory module;

said logic means (270) including means for decoding said control specification to provide signals (282, 286, 302) to said memory module (297), to said address register (280) and to said read and write logic means (286, 288, 293) to control, respectively, the type of access (282), the direction (286) of data transfer between said bidirectional bus and said memory module, and the length of data (302) to be moved.

8. The bus interface unit in accordance with Claim 7 wherein:

said address register (280) comprises a loadable counter, and said logic means (278, 270) includes means for decoding said control specification to provide a signal (302) for incrementing said counter to provide sequential addresses to said memory module (297) over said memory address bus (300), said addresses corresponding to sequential bytes of data being moved between said bidirectional bus and said memory module.

9. The bus interface unit in accordance with Claim 7 wherein:

said logic means (278, 270) includes further means responsive to energization of said input line (ISB—216) for generating cycles of a read or write operation wherein said input line (ISB—216) has status significance other than that valid data has been placed on said bus or accepted from said bus, respectively, during said read or write operation.

10. A method or transferring information between a processor and at least one peripheral device over a bidirectional bus (214),

said information including an address word and data bits,

said bus having a total number of lines which is less than the total number of bits comprising said address word,

wherein part of said address word is sent over said bus during a first cycle of operation and the remaining portion of said address word is sent over the same bus during a second cycle of operation, and,

wherein data to be transferred is set over the same bus during one or more subsequent cycles of operation,

said method comprising the steps of:

energizing, during a first cycle of operation, a first number of lines (ACD 7—0) comprising a first portion of said bus to thereby place a first number of bits (address bits 0—7) of said address word on said bus;

energizing, during said first cycle of operation, a second number of lines (ACD 15—8) comprising a second portion of said bus to thereby place a number of bits (control bits 0—7) of a control specification on said bus,

said control specification including control information to indicate to said peripheral device whether an operation is a memory access or another Input/Output device access, whether the operation is a read or write, and the number of bytes of information to be transferred during subsequent cycles; and

energizing a first simplex line (ISA—215) from said processor to said peripheral device subsequent to said first cycle to indicate to said peripheral device that a bus transaction is underway.

11. The method in accordance with Claim 10 further comprising the step of:

energizing a predetermined pattern of bits on said bus prior to said first cycle, whereby said peripheral device is able to distinguish the beginning of said first cycle by detecting a change in said pattern.

12. The method in accordance with Claim 10 further comprising the step of:

energizing a second simplex line (ISB—216) from said peripheral device to said processor during a decoded read and a decoded write operation specified by said control information to thereby indicate that valid data has been placed on said bus during a read operation and to indicate that data has been accepted during a write operation.

13. The method in accordance with Claim 10 further comprising the steps of:

energizing a number of lines (ACD 15—0) comprising a second portion of said bus to thereby place a second number of bits (address bits 15—0) of said address word on said bus during a second cycle; and

assembling said address word at said peripheral device by combining said first number of bits of said address transferred during said first cycle with said second number of bits of said address transferred during said second cycle.

14. The method in accordance with Claim 13 further comprising the step of:

sequentially incrementing (302) said assembled address word by a predetermined amount to provide a contiguous set of addresses to correspond with each cycle subsequent to said second cycle, such that bytes of information transferred in accordance with the number of bytes indicated by said control specification are paired with corresponding sequential addresses.

## Revendications

1. Pour utilisation avec une interface de microprocesseur du type ayant:

— un bus multiligne bidirectionnel (214) pour transporter des bits d'adresse et de données, le dit bus ayant un nombre total de lignes inférieur au nombre total de bits que comporte la dite adresse;

— une ligne de sortie (ISA—215);

— une ligne d'entrée (ISA—216);

— des moyens (240, 246) connectés au dit bus (214), opérant durant un premier cycle (cycle 1) pour placer un premier paquet de bits (bits d'adresse 0—7) de la dite adresse sur une première partie (ACD 7—0) des lignes du dit bus et une prescription de commande (bits de commande 0—7) précisant la direction du transfert de données et la quantité de données à transférer, la dite prescription de commande étant placée sur une seconde partie (ACD 15—8) des lignes du dit bus; et,

— des moyens (242) connectés au dit bus (214) opérant durant un deuxième cycle (cycle 2) suivant le dit premier cycle pour placer un second paquet de bits (bits d'adresse 8—24) de la dite adresse sur la dite première partie (ACD 7—0) et la dite seconde partie (ACD 15—8) des lignes du dit bus, le dit transfert de données se faisant vers un emplacement, ou provenant de celui-ci, précisé par la dite adresse, au cours de cycles postérieurs aux dits premier et deuxième cycles;

— une unité d'interface de bus comprenant:

— des moyens logiques (270, 278, 280) connectables à la dite ligne de sortie (ISA—215) et à la dite première partie (ACD 7—0) et à la dite seconde partie (ACD 15—8) des lignes du dit bus, les dits moyens incluant le moyen de placement sur registre d'adresse (280), les dits moyens logiques opérant en réponse à la dite ligne de sortie (ISA—215) et au dit premier paquet de bits de la dite adresse sur la première partie des lignes du bus (ACD 7—0), durant le dit premier cycle (cycle 1), pour placer sur registre dans les moyens de placement sur registre d'adresse (280) le dit premier paquet de bits de la dite adresse (bits d'adresse 0—7), les dits moyens logiques opérant en réponse à la dite ligne de sortie (ISA—215) et à la dite prescription de commande sur la dite seconde partie des lignes du bus (ACD 15—8), durant le dit premier cycle (cycle 1), pour décoder la dite prescription de commande et pour fournir l'information décodée de commande,

— les dits moyens logiques (270) opérant en réponse à la dite ligne de sortie (ISA 15) durant le dit deuxième cycle (cycle 2) pour placer sur registre dans les moyens de placement sur registre d'adresse (280) le dit second paquet de bits de la dite adresse (bits d'adresse 8—23);

— des premiers moyens (286, 288, 293) connectés aux dits moyens logiques (270) pour commander la direction du transfert de données; et,

— des seconds moyens (296, 280) connectés aux dits moyens logiques (270) pour commander la quantité de données transférées,

— les dits premiers (286, 288, 293) et seconds (296, 280) moyens opérant conformément à la dite information décodée de commande.

2. L'unité d'interface de bus selon la revendication 1 comprenant de plus:

— des moyens inclus dans les dits moyens logiques et connectables à la dite ligne d'entrée (ISB—216) opérant durant une opération de lecture décodée ou une opération d'écriture décodée précisée par la dite information de commande, pour activer la dite ligne d'entrée (ISB—216), à chacun des cycles postérieurs au dit deuxième cycle, afin d'indiquer par là à l'interface du dit microprocesseur que, pendant une opération de lecture, des données validées ont été placées sur le dit bus et afin d'indiquer que, pendant une opération d'écriture, les données ont été acceptées.

3. L'unité d'interface de bus selon la revendication 1, dans laquelle la dite unité d'interface de bus est connectée à un module de mémoire (297) dans lequel on peut avoir accès à des données à la dite adresse, la dite unité d'interface de bus comprenant de plus:
— un bus d'adresse mémoire (300) pour connecter la dite unité d'interface de bus au dit module mémoire (297); et
— des moyens permettant de connecter les dits moyens de placement sur registre d'adresse au dit bus d'adresse mémoire afin de fournir au dit module mémoire la dite adresse mémoire qui se compose du dit premier paquet de bits et du dit second paquet de bits de la dite adresse.

4. L'unité d'interface de bus selon la revendication 3, dans laquelle les dits moyens de placement sur registre d'adresse (280) comprennent un compteur à chargement, le dit compteur à chargement pouvant être incrémenté en réponse à une activation d'une entrée incrémentale (302) à ce compteur,
— les dits moyens logiques (270) incluant de plus des moyens de décodage de la prescription de commande précisant la quantité de données à transférer et des moyens d'activation de la dite entrée incrémentale (302) du dit compteur à chargement.

5. L'unité d'interface de bus selon la revendication 1 comprenant de plus:
— des troisièmes moyens connectables à la dite ligne de sortie (ISA—215), sensibles à la dite ligne de sortie au cours d'un cycle postérieur au dit premier cycle pour indiquer au bloc logique da la dite interface qu'une transaction a lieu sur le bus; et
— les dits moyens logiques (270) incluant des quatrièmes moyens pour activer la dite ligne d'entrée (ISB—216), la dite ligne d'entrée (ISB—216) pouvant être activée afin d'indiquer que, pendant une opération de lecture, des données validées ont été placées sur le dit bus par le bloc logique de la dite interface et que, pendant une opération d'écriture, des données validées ont été acceptées en provenance du dit bus par le bloc logique de la dite interface.

6. L'unité d'interface de bus selon la revendication 5, comprenant de plus:
— des moyens (278) connectables au dit bus bidirectionnel pour placer sur registre la dite prescription de commande composée d'une configuration déterminée de bits reçue sur les lignes du dit bus bidirectionnel;
— les dits moyens logiques (270) incluant de plus les moyens de décodage de la configuration déterminée de bits; et,
— des moyens (272) pouvant être activés par les dits moyens de décodage, opérant après détection de la dite configuration déterminée de bits pour démarrer le dit premier cycle de transfert d'information sur le dit bus (214).

7. L'unité d'interface de bus selon la revendication 1 ou à la revendication 5 comprenant de plus:
— un module de mémoire (297);
— un bus d'adresse mémoire (300) connecté au dit module de mémoire (297) et au dit registre d'adresse (280); et,
— des moyens logiques de lecture et d'écriture (286, 288, 293) connectés entre le dit bus bidirectionnel (214) et le dit module de mémoire (297) pour commander la direction du mémoire (297) pour commander la direction du transfert de données entre le dit bus bidirectionnel et le dit module mémoire;
— les dits moyens logiques (270) incluant des moyens pour décoder la dite prescription de commande afin de fournir des signaux (282, 286, 302) au dit module mémoire (297), au dit registre d'adresse (280) et aux dits moyens logiques de lecture et d'écriture (286, 288, 293) pour commander, respectivement, le type d'accès (282), la direction (286) du transfert de données entre le dit bus bidirectionnel et le dit module de mémoire, et la longueur des données (302) à transférer.

8. L'unité d'interface de bus selon la revendication 7, dans laquelle:
— le dit registre d'adresse (280) comprend un compteur à chargement, et les dits moyens logiques (278, 270) renferment un moyen de décodage de la dite prescription de commande pour fournir un signal (302) destiné à incrémenter le dit compteur afin de fournir au dit module de mémoire (297) des adresses successives par l'intermédiaire du bus d'adresse mémoire (300), les dites adresses correspondant aux octets successifs de données transférés entre le dit bus bidirectionnel et le dit module de mémoire.

9. L'unité d'interface de bus selon la revendication 7, dans laquelle:
— les dits moyens logiques (278, 270) renferment de plus des moyens sensibles à l'activation de la dite ligne d'entrée (ISB—216) pour générer les cycles d'une opération de lecture ou d'écriture, où l'état de la dite ligne d'entrée (ISB—216) a une signification autre que des données valides ont été placées sur le dit bus ou acceptées en provenance du dit bus, respectivement, au cours de la dite opération de lecture ou d'écriture.

10. Une méthode de transfert d'information entre un processeur et au moins un organe périphérique par l'intermédiaire d'un bus bidirectionnel (214),
— la dite information étant composée d'un mot d'adresse et de bits de données,
— le dit bus ayant un nombre total de lignes inférieur au nombre total de bits que comporte le dit mot d'adresse,
— dans laquelle une partie du dit mot d'adresse est envoyé par l'intermédiaire du dit bus, au cours d'un premier cycle d'opération et la partie restante du dit mot d'adresse est envoyée, par l'intermédiaire du dit bus, au cours d'un deuxième cycle d'opération, et,
— dans laquelle les données à transférer sont envoyées, par l'intermédiaire du même bus, au cours d'un ou plusieurs cycles d'opération suivants,

— la dite méthode comprenant les étapes:

— d'activation, au cours d'un premier cycle d'opération, d'un premier groupe de lignes (ACD 7—0) constituant une première partie du dit bus, de manière à placer ainsi un premier paquet de bits (bits d'adresse 0—7) du dit mot d'adresse sur le dit bus;

— d'activation, au cours du dit premier cycle d'opération, d'un second groupe de lignes (ACD 15—8) constituant une seconde partie du dit bus, de manière à placer ainsi un paquet de bits (bits de commande 0—7) d'une prescription de commande sur le dit bus,

— la dite prescription de commande comprenant l'information de commande pour indiquer au dit organe périphérique si une opération est un accès mémoire ou un accès sur un autre organe d'entrée/sortie, si l'opération est une opération de lecture ou d'écriture, et le nombre d'octets d'information à transférer au cours des cycles postérieurs; et

— d'activation d'une première ligne simplex (ISA—215) venant du dit processeur et allant vers le dit organe périphérique, postérieurement au dit premier cycle afin d'indiquer au dit organe périphérique qu'une transaction a lieu sur le bus.

11. La méthode selon la revendication 10 comprenent de plus l'étape:

— d'activation d'une configuration déterminée de bits sur le dit bus avant le dit premier cycle, permettant au dit organe périphérique de distinguer le commencement du dit premier cycle en détectant un changement dans la dite configuration.

12. La méthode selon la revendication 10, comprenant de plus l'étape:

— d'activation d'une seconde ligne simplex (ISB—216) venant du dit organe périphérique et allant vers le dit processeur au cours d'une opération de lecture décodée et d'une opération d'écriture décodée précisée par la dite prescription de commande, indiquant ainsi que, pendant une opération de lecture, des données validées ont été placées sur le dit bus et que, pendant une opération d'écriture, des données validés ont été acceptées.

13. La méthode selon la revendication 10, comprenant de plus les étapes:

— d'activation d'un certain nombre de lignes (ACD 15—0) constituant une seconde partie du dit bus, de manière à placer un second paquet de bits (bits d'adresse 15—0) du dit mot d'adresse sur le dit bus au cours d'un deuxième cycle; et

— d'assemblage du dit mot d'adresse au dit organe périphérique en combinant le dit premier paquet de bits de la dite adresse, transféré au cours du dit premier cycle, avec le dit second paquet de bits de la dite adresse, transféré au cours du deuxième cycle.

14. La méthode selon la revendication 13 comprenant de plus l'étape:

— d'incrémentation successive (302) d'un pas déterminé du dit mot d'adresse assemblé, de manière à disposer d'un ensemble d'adresse attenantes, chaque adresse correspondant à un cycle postérieur au dit deuxième cycle, de façon que les octets d'information transférés conformément au nombre d'octets indiqué par la dite prescription de commande soient associés aux adresses successives correspondantes.

**Patentansprüche**

1. Zur Verwendung mit einer Mikroprozessorschnittstelle des Typs habend:

einen bidirektionnellen Mehrleitungsbus (214) zur Übertragung von Adreß- und Datenbits, wobei die Gesamtzahl der Leitungen des Bus kleiner als die Gesamtzahl der die Adresse enthaltenden Bits ist;

eine Ausgangsleitung (ISA—215);

eine Eingangsleitung (ISB—216);

mit dem Bus (214) verbundene Mittel (240, 246), die während eines ersten Zyklus (Zyklus eins) in der Weise wirksam sind, daß sie eine erste Zahl von Bits (Adreßbits 0—7) der Adresse auf eine erste Anzahl (ACD 7—0) der Busleitungen legen und eine Steuerspzifikation (Steuerbits 0—7), welche die Richtung der Datenübertragung und die zu übertragende Datenmenge spezifiziert, auf ein zweite Anzahl (ACD 15—8) der Busleitungen legen; und

mit dem Bus (214) verbundene Mittel (242), die während eines dem ersten Zyklus folgenden zweiten Zyklus (Zyklus zwei) in der Weise wirksam sind, daß sie eine zweite Zahl von Bits (Adreßbits 8—23) der Adresse auf die erste Anzahl (ACD 7—0) und die zweite Anzahl (ACD 15—8) der Busleitungen legen, wobei die Datenübertragung zu und von einer durch die Adresse bezeichneten Stelle während den ersten und zweiten Zyklen folgenden Zyklen stattfindet;

eine Busschnittstelleneinheit, aufweisend:

Logikmittel (270, 278, 280), die mit der Ausgangsleitung (ISA—215) und der ersten Anzahl (ACD 7—0) und der zweiten Anzahl (ACD 15—8) der Busleitungen verbindbar sind, wobei genannte Logikmittel Adreßregistermittel (280) aufweisen, in Abhängigkeit von der Ausgangsleitung (ISA—215) und der ersten Zahl von Bits der Adresse auf der ersten Anzahl von Busleitungen (ACD 7—0) während des ersten Zyklus (Zyklus 1) wirksam sind, um die erste Zahl von Bits der Adresse (Adreßbits 0—7) in den Adreßregistermitteln (280) zwischenzuspeichern, in Abhängigkeit von der Ausgangsleitung (ISA—215) und der Steuerspezifikation auf der zweiten Anzahl von Busleitungen (ACD 15—8) während des ersten Zyklus (Zyklus 1) wirksam sind, um die Steuerspezifikation zur Schaffung dekodierten Steuerinformation zu dekodieren, und in Abhängigkeit von der Ausgangsleitung (ISA—215) während des zweiten Zyklus (Zyklus 2) wirksam sind, um die zweite Zahl von Bits der Adresse (Adreßbits 8—23) in den Adreßregistermitteln (280) zwischenzuspeichern;

mit den genannten Logikmitteln (270) verbundene erste Mittel (286, 288, 293) zur Steuerung der Richtung der Datenübertragung; und

mit den genannten Logikmitteln (270) verbundene zweite Mittel (296, 280) zur Steuerung der Menge der übertragenen Daten, wobei die ersten (286, 288, 293) und zweiten (296, 280) Mittel entsprechend der dekodierten Steuerinformation wirksam sind.

2. Busschnittstelleneinheit nach Anspruch 1, weiter aufweisend:

zu den Logikmitteln gehörende Mittel, die mit der Eingangsleitung (ISB—216) verbindbar sind und während einer dekodierten Lese- und einer dekodierten Schreib-Operation nach Angabe der Steuerinformation wirksam sind, um die Eingangsleitung (ISB—216) in jedem dem zweiten Zyklus nachfolgenden Zyklus zu setzen, wodurch genannter Mikroprozessor-Schnittstelle angezeigt wird, daß gültige Daten während einer Leseoperation auf den Bus gebracht und daß Daten während einer Schreiboperation angenommen worden sind.

3. Busschnittstelleneinheit nach Anspruch 1, dadurch gekennzeichnet, daß die Busschnittstelleneinheit mit einem Speichermodul (297) verbunden ist, in welchem Daten an genannter Adresse zugegriffen werden können, und daß die Busschnittstelleneinheit weiter aufweist:

einen Speicheradressenbus (300) zum Verbinden der Busschnittstelleneinheit mit dem Speichermodul (297); und

die Adreßregistermittel (280) mit dem Speicheradreßbus verbindende Mittel, welche an den Speichermodul genannte Adresse aus der ersten Zahl von Bits und der zweiten Zahl von Bits der Adresse anlegen.

4. Busschnittstelleneinheit nach Anspruch 3, dadurch gekennzeichnet, daß die Adreßregistermittel (280) einen ladbaren Zähler aufweisen, der in Abhängigkeit von der Ansteuerung eines Inkrementeingangs (302) weiterschaltbar ist und daß genannte Logikmittel (270) außerdem Mittel zum Dekodieren der die Menge der zu übertragenden Daten bezeichnenden Steuerspezifikation und Mittel zum Erregen des Inkrementeingangs (302) des ladbaren Zählers aufweisen.

5. Busschnittstelleneinheit nach Anspruch 1, weiterhin aufweisend:

mit der Ausgangsleitung (ISA—215) verbindbare dritte Mittel, die während eines dem ersten Zyklus nachfolgenden Zyklus in Abhängigkeit von der Ausgangsleitung der Schnittstellenlogik anzeigen, daß eine Bus-Transaktion abläuft; und

genannte Logikmittel (270) enthaltend vierte Mittel zur Erregung der Eingangsleitung (ISB—216), wobei die Eingangsleitung (ISB—216), bei Erregung während einer Leseoperation anzeigt, daß gültige Daten von der Schnittstellenlogik auf den Bus gegeben und während einer Schreiboperation gültige Daten von dem Bus durch die Schnittstellenlogik angenommen worden sind.

6. Busschnittstelleneinheit nach Anspruch 5, dadurch gekennzeichnet, daß weiter vorgesehen sind:

mit dem bidirektionellen Bus verbindbare Mittel (278) zur Zwischenspeicherung der Steuerspezifikation, die ein vorgegebenes Muster von auf den bidirektionellen Busleitungen empfangen Bits enthalten;

wobei die Logikmittel (270) außerdem Dekodiermittel zum Dekodieren des vorgegebenen Musters von Bits; und

von den Dekodiermitteln erregbare Mittel (272) aufweisen, die bei Feststellung des vorgegebenen Musters von Bits wirksam sind, um den ersten Zyklus der Informationsübertragung auf dem Bus (214) zu beginnen.

7. Busschnittstelleneinheit nach Anspruch 1 oder 5, weiter aufweisend:

einen Speichermodul (297);

einen mit dem Speichermodul (297) und genanntem Adreßregister (280) verbundenen Speicheradreßbus (300); und

Lese- und Schreib-Logikmittel (286, 288, 293), die zwischen dem bidirektionellen Bus (214) und dem Speichermodul (297) eingeschaltet sind und die Richtung der Datenübertragung zwischen dem bidirektionellen Bus und dem Speichermodul steuern;

wobei die Logikmittel (270) Mittel zum Dekodieren der Steuerspezifikation aufweisen, um an den Speichermodul (297), das Adreßregister (280) und die Lese- und Schreib-Logikmittel (286, 288, 293) Signale (282, 286, 302) anzulegen, welche die Art des Zugriffs (282), die Richtung (286) der Datenübertragung zwischen dem bidirektionellen Bus und dem Speichermodul und die Länge der zu bewegenden Daten (302) steuern.

8. Busschnittstelleneinheit nach Anspruch 7, dadurch gekennzeichnet, daß das Adreßregister (280) einen ladbaren Zähler aufweist und die Logikmittel (278, 270) Mittel zum Dekodieren der Steuerspezifikation enthalten, um ein den Zähler weiterschaltendes Signal (302) zum Anlegen sequentieller Adressen über den Speicheradreßbus (300) an den Speichermodul (297) zu erzeugen, wobei die Adressen sequentiellen Datenbytes entsprechen, die zwischen dem bidirektionellen Bus und dem Speichermodul bewegt werden.

9. Busschnittstelleneinheit nach Anspruch 7, dadurch gekennzeichnet, daß die Logikmittel (278, 270) außerdem Mittel aufweisen, die in Abhängigkeit von der Erregung der Eingangsleitung (ISB—216) Zyklen einer Lese- oder Schreiboperation erzeugen, wobei die Eingangsleitung (ISB—216) eine andere Zustandsbedeutung als die Bedeutung: gültige Daten auf genannten Bus gebracht oder von genanntem Bus angenommen sind, und zwar während der Lese- oder Schreiboperation.

10. Verfahren zur Übertragung von Information zwischen einem Prozessor und wenigstens einem Peripheriegerät über einen bidirektionellen Bus (214), wobei die Information ein Adreßwort und Datenbits enthält, die Gesamtzahl von Leitungen des Bus kleiner als die Gesamtzahl der das Adreßwort bildenden Bits ist, ein Teil des Adreßworts während eines ersten Operationszyklus über den Bus geschickt und der restliche Teil des Adreßworts über denselben Bus während eines zweiten Operationszyklus geschicht wird und wobei die zu übertragenden Daten über denselben Bus während eines oder mehrerer nachfolgender Operationszyklen geschickt werden, genanntes Verfahren enthaltend die folgenden Schritte:

Erregen einer einen ersten Teil des Bus bildenden ersten Anzahl von Leitungen (ACD 7—0) während eines ersten Operationszyklus, wodurch eine erste Zahl von Bits (Adreßbits 0—7) des Adreßworts auf den Bus gebracht wird;

Erregen einer einen zweiten Teil des Bus bildenden zweiten Anzahl von Leitungen (ACD 15—8) während des ersten Operationszyklus, um eine Anzahl von Bits (Steuerbits 0—7) einer Steuerspezifikation auf den Bus zu bringen, wobei die Steuerspezifikation eine Steuerinformation enthält, die dem Peripheriegerät anzeigt, ob eine Operation ein Speicherzugriff oder der Zugriff eines anderen Eingabe/Ausgabe-Geräts ist, ob die Operation eine Lese- oder eine Schreib-Operation ist, und die Anzahl von Bytes der während der nachfolgenden Zyklen zu übertragenden Information; und

Erregen einer vom Prozessor zum Peripheriegerät führenden ersten Simplex-Leitung (ISA—215) nach dem ersten Zyklus, um dem Peripheriegerät anzuzeigen, daß eine Bus-Transaktion abläuft.

11. Verfahren nach Anspruch 10, gekennzeichnet, durch den weiteren Schritt, daß ein vorgegebenes Bitmuster auf dem Bus vor dem ersten Zyklus erregt wird, wodurch das Peripheriegerät den Beginn des ersten Zyklus durch Bestimmung einer Musteränderung unterschneiden kann.

12. Verfahren nach Anspruch 10, dadurch gekennzeichnet, daß eine von dem Peripheriegerät zum Prozessor führende zweite Simplexleitung (ISB—216) während einer durch die Steuerinformation angegebenen dekodierten Lese- und einer dekodierten Schreiboperation erregt wird, um anzuzeigen, daß gültige Daten während einer Leseoperation auf den Bus gebracht und daß Daten während einer Schreiboperation angenommen worden sind.

13. Verfahren nach Anspruch 10, dadurch gekennzeichnet, daß eine einen zweiten Teil des Bus bildende Anzahl von Leitungen (ACD 15—0) erregt werden, um dadurch während eines zweiten Zyklus eine zweite Anzahl von Bits (Adreßbits 15—0) des Adreßworts auf den Bus zu bringen; und daß das Adreßwort an dem Peripheriegerät durch Kombinieren der während des ersten Zyklus übertragenen ersten Zahl von Bits der Adresse mit der während des zweiten Zyklus übertragenen zweiten Zahl von Bits der Adresse zusammengesetzt wird.

14. Verfahren nach Anspruch 13, dadurch gekennzeichnet, daß das zusammengesetzte Adreßwort um einen vorgegebenen Wert sequentiell weitergeschaltet wird (302), um einen fortlaufenden Satz von Adressen entsprechend jedes auf den zweiten Zyklus folgenden Zyklus derart zuschaffen, daß entsprechend der von Steuerspezifikation angegebenen Anzahl von Bytes übertragene Informationsbytes mit entsprechenden aufeinanderfolgenden Adressen gepaart werden.

# FIG. I

INTERCHIP BUS

210 — INSTRUCTION UNIT (FIG. 4)

212 — EXECUTION UNIT (FIG. 5)

200

ISB

ACD BUS

215, 216, 214 ISA

MICROPROCESSOR

201 — BUS INTERFACE UNIT (FIG. 6)

PERIPHERAL UNITS

# FIG. 2

| | 1st CYLCE | 2nd CYCLE | 3rd CYCLE | | LAST CYCLE |
|---|---|---|---|---|---|

CLKA

ACD

| NULL (ALL I's) | LSB ADDR. (ACD 7-0) CONTROL SPEC. (ACD 15-8) | MSB ADDR. (ACD 15-0) | Rd/ WR DATA | NULL (ALL I's) | NULL (ALL I's) |

ISA

| LOW | LOW | HIGH = VALID LOW = CANCEL REQ. | HIGH | HIGH (READ) LOW(WRITE) | LOW |

| IPC | IPC | STRETCH | ERROR |

ISB

HIGH = NO IPC

LOW = IPC

HIGH { VALID DATA (Rd) DATA ACCEPTED (WR)

LOW { NO VALID DATA (Rd) DATA NOT ACC. (WR)

HIGH = NO ERROR

LOW = ERROR

1

# FIG. 3

## CONTROL SPECIFICATION - ACD BITS 15-8

| 15 | 14 | 13 | 12 | 11 | 10 | 9 | 8 |
|---|---|---|---|---|---|---|---|
| ACCESS | DIRECT-ION | MOD-IFIER | LENGTH | | | MODIFIERS | |
| 0=<br>MEMORY<br><br>I=<br>OTHER | 0=<br>READ<br><br><br>I=<br>WRITE | 0=<br>NOM-INAL<br>MEM.<br>ACCESS<br>I=<br>READ<br>MODIFY-WRITE<br>MEM.<br>ACCESS | 000=1BYTE<br>001=2BYTES<br>010=4BYTES<br>011=6 BYTES<br>100=8BYTES<br>101=10BYTES<br>110=16BYTES<br>101 =20BYTES | | | BIT 15=0<br>00=INST.SEG.ACCESS<br>01=STACK SEG.ACCESS<br>10=CONTEXT CONTROL<br>SEG. ACCESS<br>11=OTHER<br><br>BIT 15=1<br>00=PRI.REG. ACCESS<br>(LENGTH NOM. 2B)<br>01=INTERMODULE TRNS<br>(LENGTH NOM.2B)<br>10=RESERVED<br>11= NULL | |

# FIG. 4

## INSTRUCTION UNIT

FIG.5 ISA
FIG.6 ISB
ACD 15-0
ACD BUS
FIG.6 (INPUT ONLY) 214
223
INSTRUCTION DECODER (I D) 222
CONTROL LINES
MICRO INSTRUCTION SEQUENCER (MIS) 224
FIG.5
INTERCHIP BUS
221 VALID INSTR. FETCH DATA

FIG. 5

FIG.6

BUS INTERFACE UNIT 201

0 050 109

FIG.7 NOMINAL READ TIMING

FIG.8 MINIMUM READ TIMING

0 050 109

## FIG. 9 NOMINAL WRITE TIMING

LAST CYCLE

CYCLE 1  CYCLE 2  CYCLE 3  CYCLE 4  CYCLE 5  CYCLE 6  CYCLE 7

CLKA

ICB    32 BIT WRITE ACCESS          NO OPS                    NEXT ACCESS

ACD    ADDR/SPEC   ADDR        WD0          WD1

ISA'

ISB'   IPC  IPC  IPC  IPC  STRETCH STRETCH/STRETCH\STRETCH/STRETCH\ERROR

## FIG. 10 MINIMUM WRITE TIMING

CYCLE 1  CYCLE 2  CYCLE 3  LAST CYCLE

CLKA

ICB    WRITE ACCESS        NO OPS        NEXT ACCESS        NO OPS

ACD    ADDR/SPEC  ADDR  WD              ADDR/SPEC  ADDR

ISA'

ISB'   IPC  IPC  IPC  IPC  IPC /STRETCH\ERROR  IPC  IPC /STRETCH